Europäisches Patentamt

European Patent Office

Office européen des brevets

(11) Publication number:　0 169 178
B1

# EUROPEAN PATENT SPECIFICATION

(45) Date of publication of patent specification: 18.10.89

(21) Application number: 85830162.5

(22) Date of filing: 26.06.85

(51) Int. Cl.⁴: **F 16 D 65/20**

(54) Security caliper for disk brake of motor vehicles.

(30) Priority: 11.07.84 IT 6771084

(43) Date of publication of application:
22.01.86 Bulletin 86/04

(45) Publication of the grant of the patent:
18.10.89 Bulletin 89/42

(84) Designated Contracting States:
DE FR GB

(56) References cited:
FR-A-1 394 878

PATENT ABSTRACTS OF JAPAN, vol. 2, no. 74
(M-78), 10th June 1978, page 1741 M 78

(73) Proprietor: FIAT AUTO S.p.A.
Corso Giovanni Agnelli 200
I-10135 Torino (IT)

(72) Inventor: Di Giusto, Nevio
Via Guarini 48
I-10078 Venaria (To) (IT)
Inventor: Galzigna, Ivo
Via Monfalcone 54
I-10136 Torino (IT)

Courier Press, Leamington Spa, England.

# Description

This invention covers a caliper for disc brake systems intended primarily for motor vehicles, provided with two pistons, one for normal braking, the other for emergency braking.

It is known that during heavy braking the action of brakes on the rear axle is minimum inasmuch as almost all the weight of the vehicle is transferred to the front axle and the rear end tends to rise.

It follows that, should the front axle braking system fail during hard braking, there would be very few probabilities of stopping the vehicle within a useful distance.

From French patent 1 394 878 it is known a caliper for a disc brake system comprising two superimposed coaxial pistons, one top and one bottom having the same diameter and sliding in a single housing, so as to define superimposed chambers. The bottom chamber is connected with the brake circuit, the upper chamber is connected with the emergency braking circuit.

The top piston of said caliper is not held in its higher position and could interfere with the bottom piston during normal brake operations. The purpose of this invention is to provide a device which will permit the application of an adequate braking force to the front axle even when the front axle brake circuit is damaged and pressure cannot build up, avoiding the disadvantages of French patent 1 394 878.

According to the invention, this is obtained by a security caliper for disc brake systems of a two-axle motor vehicle, provided with two coaxial pistons, one top for security braking and one bottom for normal braking, sliding in a single housing so as to define two superimposed chambers; the top chamber being connected via lines to the brake circuit of the axle opposed to the one which carries the caliper, the bottom chamber being connected via lines to the circuit of the axle which carries the caliper, the two pistons having same diameter and the connection between the bottom chamber and the brake circuit being obtained by a slot in the caliper body at the end of the side wall of the top piston, characterised in that said top piston is held in its higher position by a rubber ring fitted in a side wall groove.

Further characteristics and advantages of the present invention will emerge from the following description referred to the attached drawings provided on a non-restricting example, of which:

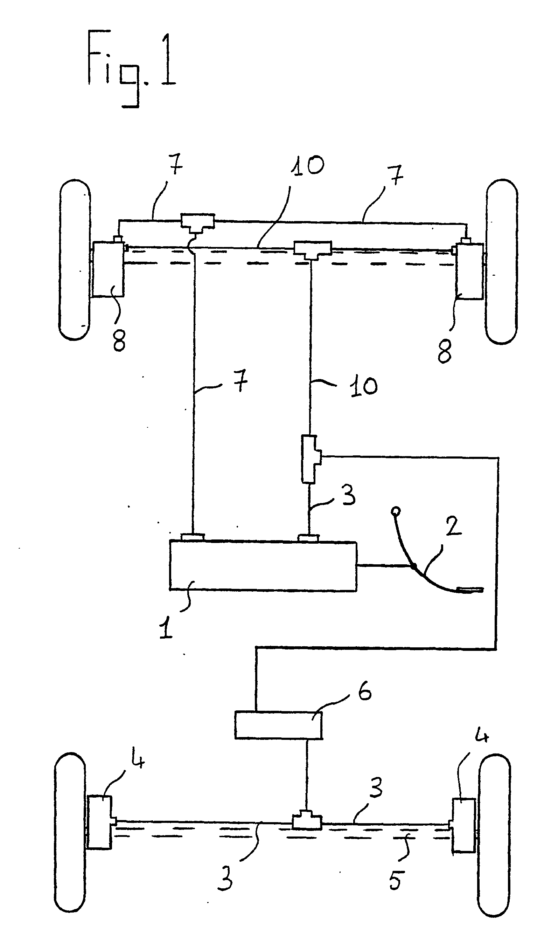

Fig. 1 is the diagram of a motor vehicle braking system fitted with the device covered in the description of the invention;

Fig. 2 is a partial cross-section of the device covered in this description of the invention.

With regard to the figures, reference numeral 1 indicates a master cylinder of a motor vehicle braking system, operated by pedal 2. The master cylinder has two chambers (not shown) connected to circuit 3, which supplies fluid under pressure to brake calipers 4 of vehicle rear axle 5, with interposed mechanical load proportioning valve 6 (if any) of known type and to circuit 7 which supplies fluid to brake calipers 8 of front axle 9.

Another line 10 connects circuit 3 of the rear axle to front axle brake calipers 8.

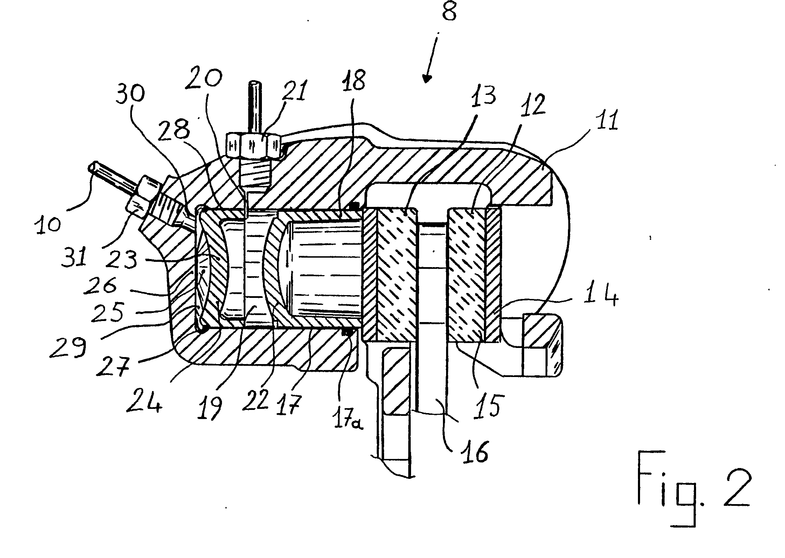

Figure 2 shows brake system front right caliper 8 with body 11 holding in a conventional way two friction pads 12 and 13 consisting of metal backing 14 with friction material 15 which is pressed against disc 16 to stop rotation thereof.

Caliper body 11 features cylindrical housing 17 with seal 17a to ensure tightness of inverted "U" section piston 18 which forms, inside housing 17, chamber 19 connected to front circuit 7 via slot passage 20 and connector 21.

Chamber 19 is defined by top wall 22 of piston 18 and by bottom face of wall 23 of piston 24, also with inverted "U" section, positioned so that truncated cone 25 integral with top face of wall 23 rests on end wall 26 of cylindrical housing 17.

Piston 24 is held against end wall 26 by rubber ring 27 fitted in a groove on piston side wall 28. Side wall length is such that its lower edge aligns with the upper edge of passage 20.

Chamber 29, formed by walls 26 and 23, is connected via passage 30 and connector 31 to line 10 connected to circuit 3 of rear brakes.

Operation

Operation of the device is as follows:

When the whole circuit operates normally the front caliper works only with piston 18 which is displaced by pressure generated inside chamber 19 when master cylinder 1 is operated.

Actually, the same amount of pressure is also generated inside chamber 29; however, piston 24 remains stationary because the two pressures correspond and, in addition, the piston is retained by rubber ring 27.

When, for any reason, pressure in chamber 19 fails, pressure in chamber 29 overcomes resistance of rubber ring 27 so that piston 24 moves to the right thus closing slot passage 20. In this way chamber 19 is sealed and pressure exerted against piston 24 is transmitted to piston 18 which can restore the braking action by pressing friction pad 13.

It is evident that, should pressure in chamber 29 fail, the front brake circuit will continue to operate regularly.

# Claim

Security caliper for a disc brake system of a two-axle motor vehicle, provided with two coaxial pistons (18, 24), one top (24) for emergency braking and one bottom (18) for normal braking, sliding in a single housing (17) so as to define two superimposed chambers (19, 29); the top chamber (29) being connected via lines (10) to the brake circuit (3) of the axle opposed to the one which carries the caliper, the bottom chamber (19) being connected via lines (7) to the circuit of the axle which carries the caliper, the two pistons (18, 24) having same diameter and the connection between the bottom chamber (19) and the brake circuit being obtained by a slot (20) in the caliper body (11) at the end of the side wall (28) of the top piston (24), characterised in that said top piston (24) is held in its higher position by a rubber ring (27) fitted in a side wall (28) groove.

## Patentanspruch

Sicherheitssattel für eine Scheibenbremse eines zweiachsigen Kraftfährzeugs, der zwei koaxiale Kolben (18, 24) aufweist, von denen einer für Notfallbremsungen dient und einen Deckel (24) bildet, während der andere für normale Bremsungen dient und einen Boden (18) bildet, und die beide in einem gemeinsamen Gehäuse (17) verschiebbar sind und zwei hintereinanderliegende Kammern (19, 29) bilden, von denen die durch den Deckel begrenzte Kammer (29) über Leitungen (10) mit dem Bremskreis (3) der Achse verbunden ist, die der den Bremssattel tragenden Achse gegenüberliegt, während die durch den Boden begrenzte Kammer (19) über Leitungen (7) mit dem Bremskreis der den Bremssattel tragenden Achse verbunden ist, wobei die beiden Kolben (18, 24) denselben Durchmesser haben und die Verbindung zwischen der durch den Boden begrenzten Kammer (19) und dem Bremskreis durch einen Schlitz (20) im Sattelgehäuse (11) am Ende der Seitenwand (28) des den Deckel bildenden Kolbens (24) hergestellt ist, dadurch gekennzeichnet, daß der Kolben (24) in seiner oberen Stellung durch einen elastischen Ring (27) gehalten wird, der in einer Nut der Seitenwand (28) sitzt.

## Revendication

Etrier de sécurité pour frein à disque d'un véhicule à moteur à deux essieux, comprenant deux pistons coaxiaux (18, 24), un piston supérieur (24) étant destiné au freinage d'urgence et un piston inférieur (18) étant destiné au freinage normal, les pistons coulissant dans un corps unique (17) afin qu'ils délimitent deux chambres superposées (19, 29), la chambre supérieure (29) étant connectée par des canalisations (10) au circuit (3) de freinage de l'essieu qui est opposé à celui qui porte l'étrier, la chambre inférieure (19) étant connectée par des canalisations (7) au circuit de l'essieu qui porte l'étrier, les deux pistons (18, 24) ayant le même diamètre et la connexion entre la chambre inférieure (19) et le circuit de freinage étant réalisée par une fente (20) formée dans le corps (11) de l'étrier à l'extrémité de la paroi latérale (28) du piston supérieur (24), caractérisé en ce que le piston supérieur (24) est maintenu dans sa position supérieure par une bague de caoutchouc (27) logée dans une gorge de la paroi latérale (28).

Fig. 1

Fig. 2